# EUROPÄISCHE PATENTSCHRIFT

(11) **EP 1 701 872 B1**
(45) Veröffentlichungstag und Bekanntmachung des Hinweises auf die Patenterteilung: **12.05.2010**
(21) Anmeldenummer: 04819668.7
(22) Anmeldetag: 04.11.2004
(51) Int. Cl.: B60T 8/00

(54) **VERFAHREN ZUR FUNKTIONSSTEUERUNG EINES ELEKTRONISCHEN FAHRSTABILITÄTSPROGRAMMS FÜR EIN KRAFTFAHRZEUG**
METHOD FOR CONTROLLING THE OPERATION OF AN ELECTRONIC STABILITY PROGRAM FOR A MOTOR VEHICLE
PROCEDE DE COMMANDE DU FONCTIONNEMENT D'UN PROGRAMME DE STABILITE ELECTRONIQUE D'UN VEHICULE

(30) Priorität: 03.12.2003 DE 10356378
(43) Veröffentlichungstag der Anmeldung: 20.09.2006
(73) Patentinhaber: Continental Aktiengesellschaft, 30165 Hannover (DE)
(72) Erfinder: NETTELMANN, Marc, 30826 Garbsen (DE); GROTENDORST, Jörg, 30823 Garbsen (DE)
(74) Vertreter: Finger, Karsten
(86) Internationale Anmeldenummer: PCT/EP2004/052793
(87) Internationale Veröffentlichungsnummer: WO 2005/054024

(56) Entgegenhaltungen:
- EP-A- 0 170 623
- EP-A- 0 425 810
- DE-A1- 4 027 785
- DE-A1- 10 127 394
- DE-A1- 10 127 395
- DE-A1- 10 205 229
- DE-A1- 19 601 529

## Beschreibung

Die Erfindung betrifft ein Verfahren zur Funktionssteuerung eines elektronischen Fahrstabilitätsprogramms für ein Kraftfahrzeug gemäß dem Obenbegriff des Patentanspruchs 1.

Aus den deutschen Patentanmeldungen DE 199 36 439 A1 sowie DE 100 34 723 A1 ist es bekannt, dass ein in einem Kraftfahrzeug wirksames elektronisches Fahrstabilitätsprogramm (ESP) dafür sorgen kann, dass der Fahrer die Kontrolle über sein Kraftfahrzeug behält, wenn dieses wegen starker Lenkbewegungen, einer starken Fahrzeugverzögerung und/oder widriger Witterungsbedingungen aus seiner Spur auszubrechen droht. Dazu überwacht ein ESP-Computer mit Hilfe von Sensoren und diesem Fahrstabilitätsprogramm den Fahrzustand des Kraftfahrzeuges und das Lenkverhalten des Fahrers. Durch gezielte Betätigung der Betriebsbremse an einzelnen Fahrzeugrädern sowie gegebenenfalls eine Reduzierung der Motorleistung stabilisiert das Fahrstabilitätsprogramm das Kraftfahrzeug und vermeidet so unkontrollierte Fahrzeugbewegungen.

Die DE 196 01 529 A1, die den Oberbegriff des Anspruchs 1 definiert, offenbart eine Verfahren zur Verbesserung des Regelverhaltens bei adaptiven Bremssystemen (ABS), d.h. bei Blockierschutzsystemen für die Bremsen eines geländegängigen Fahrzeuges im Off-Road-Betrieb. Dabei wird die "normale" Regelung und damit der bei Unterschreitung einer bestimmten Mindestdrehzahl übliche Bremsdruckabbau für eine gewisse Zeit ausgeschaltet, wenn sich das Fahrzeug im Gelände befindet. Die Überprüfung der hierzu erforderlichen Bedingungen erfolgt anhand von Auswertungen der Geschwindigkeit, der Rad- oder Fahrzeugschwingungen etc.

Zudem ist es bekannt, dass mit einem solchen Fahrstabilitätsprogramm ausgestatte Fahrzeuge in der Regel über einen elektrischen Schalter verfügen, durch dessen Betätigung das Fahrstabilitätsprogramm aktivierbar oder deaktivierbar ist. Eine Unterbindung des Regelungseingriffs eines solchen Fahrstabilitätsprogramms kann beispielsweise bei Schnee- und Eisglätte sinnvoll sein. Insbesondere bei wechselnden Fahrbahneigenschaften ist der Fahrzeugführer genötigt, das Fahrstabilitätsprogramm fahrsituationsgerecht ein- oder auszuschalten.

Außerdem kann es beim Winterbetrieb des Fahrzeuges mit einem elektronischen Fahrstabilitätsprogramm dazu kommen, dass sich ein sogenannter Schneekeil zwischen der Fahrbahn und den Fahrzeugboden bzw. den Fabrzeugrädern aufbaut. Ein solcher Schneekeil entsteht beispielsweise durch ein Zusammenschieben von Schnee im wesentlichen parallel zur Fahrbahnoberfläche oder durch das Einsinken der Fahrzeugräder in eine vergleichsweise hohe Schneeschicht unter Verpressung desselben. Gleichwirkend können auch Keile aus anderen Fahrwegmaterialien wie Sand, Schotter, Steinen, Zweigen usw. entstehen. Ein Fahrwegmaberialkeil kann ein Fahrzeugrad bzw. eine Fahrzeugecke oder eine Fahrzeugachse bzw. die komplette Vorder- oder Hinterseite des Fahrzeugs betreffen.

Nachteilig im Hinblick auf die Wirkungsweise eines elektronischen Fahrstabilitätsprogramms ist in einer solchen Fahrsituation, dass ein von dem Fahrwegmaterialkeil betroffenes Fahrzeugrad abgebremst und somit nur noch ein reduziertes oder gar kein Antriebsmoment antriebswirksam auf die Fahrbahn übertagen kann. Dieser Zustand wird von dem Fahrstabilitätsprogramm erkannt, so dass dieses durch gezielten Bremseingriff beispielsweise auf das axial gegenüberliegende Fahrzeugrad einwirkt und dessen Drehmomentübertagungsfähigkeit auf die Fahrbahn derart reduziert, dass keine Drehbewegung des Fahrzeugs um seine Hochachse eintritt.

Bei geringer Ausgangsgeschwindigkeit des Fahrzeugs kann dies letztlich zum Fahrzeugstillstand führen, wobei es dem Fahrer bei eingeschaltetem Fahrstabilitätsprogramm nicht möglich ist, sich beispielsweise mit durchdrehenden Fahrzeugrädern durch den jeweiligen Fahrwegmaterialkeil "durchzufräsen" oder in anderer Weise wegzubewegen.

Darüber hinaus kann das Auffahren eines Fahrzeuges mit einem Niveauregulierungssystem auf einen Fahrwegmaterialkeil dazu führen, dass dieses zum Ausgleich der sensierten Schräglage ein keilbezogenes einseitiges Absenken oder Anheben der Fahizeugkarosserie auslöst, wodurch der Fabrzeugunterboden großflächig auf den Fahrwegmaterialkeil aufsetzt oder die betroffene Fahrzeugvorder- bzw. Fahrzeughinterseite zum Niveauausgleich insgesamt angehoben wird.

Zur Vermeidung der genannten Nachteile soll gemäß der Aufgabe an die Erfindung ein Verfahren zur Funktionssteuerung eines elektronischen Fahrstabilitätsprogramms vorgestellt werden, mit dem ein fahrsituationsgerechter Betrieb eines Kraftfahrzeuges auch bei der Bildung eines Fahrwegmaterialkeils vor den Fahrzeugrädern oder zwischen dem Fahrzeugboden und der Fahrbahn gewährleistet ist.

Die Lösung dieser Aufgabe ergibt sich aus den Merkmalen des Hauptanspruchs, während vorteilhafte Weiterbildungen und Ausgestaltungen der Erfindung den Unteransprüchen entnehmbar sind.

Demnach ist erfindungsgemäß ein Verfahren zur Funktionssteuerung eines elektronischen Fahrstabilitätsprogramms für ein Kraftfahrzeug vorgesehen, welches dadurch gekennzeichnet ist, dass dieses in Abhängigkeit von der Betriebssituation des Kraftfahrzeuges automatisch in Betrieb genommen oder ausgeschaltet wird, wobei ein in Funktion befindliches Fahrstabilitätsprogramm dann automatisch dann ausgeschaltet wird, wenn das Fahrzeug auf einen Fahrwegmaterialkeil aufgefahren ist.

Unter den Begriff "Betriebssituation" fallen im Zusammenhang mit der hier beschriebenen Erfindung alle Fahrzeugnutzungssituationen, so dass ein Fahrstabilitätsprogramm erfindungsgemäß auch unmittelbar nach der Inbetriebnahme des Fahrzeugs, beispielsweise durch das übliche Drehen eines Zündschlüssels in einem Zündschloss, ausgeschaltet wird oder ausgeschaltet bleibt, wenn das Fahrzeug auf einen den Betrieb des Fahrzeuges störenden Fahrwegmaterialkeil aufgefahren ist.

Zudem ist es Bestandteil der Erfindung, das dass Fahrstabilitätsprogramm nach einer selbsttätigen Stillsetzung automatisch wieder in Betrieb genommen wird, wenn kein störender Fahrwegmaterialkeil mehr zwischen dem Fahrzeug und der Fahrbahn vorhanden ist.

Die vorgestellte autonome Funktionsweise ermöglicht es, dass der Fahrer nicht mehr wie bisher durch ein bedarfsgerechtes Ein- oder Ausschalten des Fahrstabilitätsprogramms von seinen Hauptaufgaben beim Betrieb des Fahrzeuges abgelenkt wird.

Im Zusammenhang mit dieser Erfindung sein darauf hingewiesen, dass das erfindungemäße Verfahren solche störenden Kontakte mit einem Fahrwegmaterialkeil berücksichtigt, die aus an sich losem, jedoch unter dem Druck verpressbaren Fahrwegmaterialien wie Schnee, Sand, Schotter usw. oder auch zusammenschiebbaren Materialien wie etwa Steine und Zweige bestehen.
In vorteilhafter Weiterbildung der Erfindung kann vorgesehen sein, dass zur Erkennung des Auffahrens des Fahrzeugs auf einen Fahrwegmaterialkeil Drucksensoren an den Luftfedern des Fahrzeugs und/oder Abstandssensoren zur Bestimmung des Abstands des Fahrzeugunterbodens oder der Radachse zur Fahrbahn genutzt werden.

Dabei wird es als vorteilhaft angesehen, wenn das elektronische Fahrstabilitätsprogramm mit einem Niveauregulierungsprogramm zusammenwirkt, welches zur Erkennung einer Situation geeignet ist, in der sich das Kraftfahrzeug angehoben auf einer Hebebühne befindet (Hebebühnensituation).

Hinsichtlich der Erkennung einer Hebebühnensituation oder der Erkennung eines Fahrwegmaterialkeils zwischen dem Fahrzeug und der Fahrbahn wird vorzugsweise ein Luftfedersteuergerät sowie diesem zugeordnete Sensoren genutzt.

Verfahrensgemäß wird dabei auf das Vorliegen einer Hebebühnensituation oder eines Fahrwegmaterialkeils erkannt, wenn bei entlüfteter Luftfeder der Abstand zwischen dem Fahrzeugboden und der Fahrbahn und/oder der Abstand zwischen wenigstens einer Radachse bzw. einem Fahrzeugrad und dem Fahrzeugboden einen vorgegebenen Sollwert überschreitet.

Zur weiteren Verbesserung der Bestimmung der vorgenannten Betriebssituationen des Fahrzeugs kann zudem vorgesehen sein, dass auf das Vorliegen einer Hebebühnensituation oder das Vorhandensein eines störenden Kontaktes mit einem Fahrwegmaterialkeil erst dann geschlossen wird, wenn die genannten Kriterien länger als einen vorgegebenen Zeitraum andauern.

Sobald eine Hebebühnensituation oder ein Fahrwegmaterialkeil festgestellt wurde, erzeugt das Luftfedersteuergerät entsprechende Signale zur Deaktivierung oder Aktivierung des Fahrstabilitätsprogramms und leitet diese an ein Fahrstabilitätsteuergerät weiter. Es kann aber auch vorgesehen sein, dass die Fahrstabilitäts- und Luftfedersteuerungsfunktionen von einem gemeinsamen Steuerungsgerät nach vorgegebenen elektronischen Programmen betrieben werden.

Sofern nun eine Hebebühnensituation erkannt wird, sieht die Erfindung vor, dass die Luftfedern wieder auf ein Ausgangsniveau mit Druckluft befüllt werden und jegliche Verstellung der Niveauausgleichseinrichtung unterbunden wird, solange der Antriebsmotor des Fahrzeugs abgeschaltet ist

In demjenigen Fall, in dem ein den Fahrbetrieb störender Fahrwegmaterialkeil zwischen dem Fahrweg und dem Fahrzeug festgestellt ist, wird eine Verstellung der Niveauausgleichseinrichtung beispielsweise zur Vergrößerung des Fahrzeugbodenabstandes zur Fahrbahn zugelassen, sofern der Antriebsmotor des Fahrzeugs eingeschaltet ist. Dadurch kann trotz der erkannten Schräglage aufgrund des Fahrwegmaterialkeils das Fahrzeug mit Hilfe der Luftfedern an den Fahrzeugrädern in eine vergleichsweise horizontale Lage eingestellt werden. Durch die ebenfalls erfolgende automatische Abschaltung des Fahrstabilitätsprogramms kann das Fahrzeug dann vorteilhaft den beispielsweise als Schneekeil ausgebildeten Fahrwegmaterialkeil durchfahren.

## Patentansprüche

1. Verfahren zur Funktionssteuerung eines elektronischen Fahrstabilitätsprogramms für ein Kraftfahrzeug, wobei das Fahrstabilitätsprogramm in Abhängigkeit von der jeweiligen Betriebssituation des Kraftfahrzeuges automatisch in Funktion genommen oder ausgeschaltet wird, und ein in Funktion befindliches Fahrstabilitätsprogramm automatisch dann abgeschaltet wird, wenn das Fahrzeug auf einen Fahrwegmaterialkeil aufgefahren ist, **dadurch gekennzeichnet, dass** zur Erkennung eines störenden Kontaktes zwischen dem Fahrzeug und einem Fahrwegmaterialkeil Drucksensoren an den Luftfedern des Fahrzeugs und/oder Abstandssensoren zur Bestimmung des Abstands des Fahrzeugbodens oder der Fahrzeugachse zur Fahrbahn genutzt werden, wobei ein Luftfedersteuergerät zur Deaktivierung oder Aktivierung des Fahrstabilitätsprogramms entsprechende Signale erzeugt und an ein Fahrstabilitätsteuergerät weiterleitet.

2. Verfahren nach Anspruch 1, **dadurch gekennzeichnet, dass** ein Fahrstabilitätsprogramm unmittelbar nach der Inbetriebnahme des Fahrzeugs ausgeschaltet wird oder ausgeschaltet bleibt, wenn das Fahrzeug auf einen Fahrwegmaterialkeil aufgefahren ist.

3. Verfahren nach Anspruch 1 oder 2, **dadurch gekennzeichnet, dass** das Fahrstabilitätsprogramm nach einer automatischen Stillsetzung automatisch wieder in Betrieb genommen wird, wenn das Fahrzeug nicht mehr mit einem Fahrwegmaterialkeil Kontakt hat.

4. Verfahren nach wenigstens einem der Ansprüche 1 bis 3, **dadurch gekennzeichnet, dass** Fahrwegmaterialkeile berücksichtigt werden, die aus an sich losem, jedoch unter Druck verpressbaren Fahrwegmaterialien wie beispielsweise Schnee, Sand sowie Schotter oder aus zusammenschiebbaren Materialien wie beispielsweise Steinen und Zweigen bestehen.

5. Verfahren nach Anspruch 4, **dadurch gekennzeichnet, dass** zur Bestimmung des Vorliegens einer Hebebühnensituation oder eines störenden Kontaktes mit einem Fahrwegmaterialkeil ein Luftfedersteuergerät sowie zugeordnete Sensoren genutzt werden.

6. Verfahren nach Anspruch 5, **dadurch gekennzeichnet, dass** dieses mit einem Niveauregulierungsverfahren zusammenwirkt, welches zur Erkennung einer Situation geeignet ist, in der sich das Kraftfahrzeug angehoben auf einer Hebebühne befindet.

7. Verfahren nach Anspruch 5 oder 6, **dadurch gekennzeichnet, dass** das Vorliegen einer Hebebühnensituation oder eines störenden Kontaktes mit einem Fahrwegmaterialkeil erkannt wird, wenn bei entlüfteter Luftfeder der Abstand zwischen dem Fahrzeugboden und der Fahrbahn und/oder der Abstand zwischen wenigstens einer Radachse bzw. eines Fahrzeugrades und dem Fahrzeugboden einen vorgegebenen Sollwert überschreitet.

8. Verfahren nach Anspruch 7, **dadurch gekennzeichnet, dass** das Vorliegen einer Hebebühnensituation oder eines störenden Kontaktes mit einem Fahrwegmaterialkeil erkannt wird, wenn die Kriterien des Anspruchs 7 länger als einen vorgegebenen Zeitraum andauern.

9. Verfahren nach wenigstens einem der vorherigen Ansprüche, **dadurch gekennzeichnet, dass** bei erkannter Hebebühnensituation die Luftfedern auf ein Ausgangsniveau mit Druckluft befüllt werden und jegliche Verstellung der Niveauausgleichseinrichtung unterbunden wird, wenn der Antriebsmotor des Fahrzeugs abgeschaltet ist.

10. Verfahren nach einem der Ansprüche 1 bis 9, **dadurch gekennzeichnet, dass** nach dem Erkennen eines störenden Kontaktes mit einem Fahrwegmaterialkeil eine Verstellung der Niveauausgleichseinrichtung zugelassen wird, wenn der Antriebsmotor des Fahrzeugs eingeschaltet ist.

11. Verfahren nach einem der Ansprüche 1 bis 10, **dadurch gekennzeichnet, dass** eine Verstellung der Niveauausgleichseinrichtung zugelassen wird, durch die eine Vergrößerung des Abstandes des Fahrzeugbodens zur Fahrbahn bewirkt wird.

## Claims

1. Method for controlling the functions of an electronic driving stability programme for a motor vehicle, the driving stability programme being automatically activated or deactivated according to the respective operational situation of the motor vehicle, and in that an activated driving stability programme is switched off automatically if the vehicle is driven onto a wedge of roadway material, **characterized in that** pressure sensors on the air springs of the vehicle are used to detect disruptive contact between the vehicle and a wedge of roadway material, and/or distance sensors are used to determine the distance from the bottom of the vehicle or the axle of the vehicle to the underlying surface, the air spring control device generating appropriate signals for deactivating or activating the driving stability programme and passes them onto a driving stability control device.

2. Method according to Claim 1, **characterized in that** a driving stability programme is deactivated directly after the vehicle is activated, or remains deactivated if the vehicle is driven onto a wedge of roadway material.

3. Method according to Claim 1 or 2, **characterized in that** the driving stability programme is activated automatically again after automatic deactivation if the vehicle is no longer in contact with the wedge of roadway material.

4. Method according to at least one of Claims 1 to 3, **characterized in that** wedges of roadway material which are composed of loose roadway materials which can however be compacted under pressure, such as for example snow, sand or grit, or of materials which can be pushed together, such as, for example stones and branches.

5. Method according to Claim 4, **characterized in that** an air spring control device and assigned sensors are used to determine the presence of a lifting platform situation or of disruptive contact with a wedge of roadway material.

6. Method according to Claim 5, **characterized in that** said method interacts with a ride level control method which is suitable for detecting a situation in which the motor vehicle is raised on a lifting platform.

7. Method according to Claim 5 or 6, **characterized in that** the presence of a lifting platform situation or of disruptive contact with a wedge of roadway material is detected if, when the air spring is vented, the distance between the bottom of the vehicle and the underlying surface and/or the distance between at least one wheel axle and a vehicle wheel and the bottom of the vehicle exceeds a predefined set point value.

8. Method according to Claim 7, **characterized in that** the presence of a lifting platform situation or of disruptive contact with a wedge of roadway material is detected if the criteria of Claim 7 last for longer than a predefined time period.

9. Method according to at least one of the preceding claims, **characterized in that** when a lifting platform situation is detected the air springs are filled with compressed air to an initial level and any adjustment of the ride level compensation device is prohibited if the drive engine of the vehicle is switched off.

10. Method according to one of Claims 1 to 9, **characterized in that** after disruptive contact with a wedge of roadway material has been detected, adjustment of the ride level compensation device is permitted if the drive engine of the vehicle is switched on.

11. Method according to one of Claims 1 to 10, **characterized in that** adjustment of the ride level compensation device which causes the distance from the bottom of the vehicle to the underlying surface to become larger is permitted.

## Revendications

1. Procédé de commande du fonctionnement d'un programme électronique de stabilité de conduite d'un véhicule automobile, le programme de stabilité de conduite étant automatiquement mis en fonctionnement ou débranché en fonction de la situation particulière de fonctionnement du véhicule automobile, le programme de stabilité de conduite en fonctionnement étant débranché automatiquement si le véhicule est passé sur un matériau étranger présent sur la chaussée,
**caractérisé en ce que**
des détecteurs de pression prévus sur les amortisseurs pneumatiques du véhicule et/ou des détecteurs de distance qui déterminent la distance entre le plancher du véhicule ou l'essieu du véhicule et la chaussée sont utilisés pour détecter un contact perturbateur entre le véhicule et le matériau étranger présent sur la chaussée et
**en ce qu'**un appareil de commande des amortisseurs pneumatiques forme des signaux qui permettent de désactiver ou d'activer le programme de stabilité de conduite et les transmet à un appareil de commande de la stabilité de conduite.

2. Procédé selon la revendication 1, **caractérisé en ce que** le programme de stabilité de conduite est débranché immédiatement après le démarrage du véhicule ou reste débranché lorsque le véhicule est passé sur une irrégularité du matériau de la chaussée.

3. Procédé selon les revendications 1 ou 2, **caractérisé en ce qu'**après un arrêt automatique, le programme de stabilité de conduite est remis automatiquement en fonctionnement une fois que le véhicule n'est plus en contact avec un matériau étranger présent sur la chaussée.

4. Procédé selon au moins l'une des revendications 1 à 3, **caractérisé en ce qu'**il tient compte de la présence d'un matériau étranger sur la chaussée constitué d'un matériau lâche mais compressible sous pression recouvrant la chaussée, par exemple de la neige, du sable, du gravier ou des matériaux aptes à se rassembler, par exemple des pierres ou des branches.

5. Procédé selon la revendication 4, **caractérisé en ce que** pour déterminer la présence d'une situation de "flottement" ou un contact perturbateur avec un matériau étranger présent sur la chaussée, il utilise un appareil de commande des amortisseurs pneumatiques associé à des détecteurs.

6. Procédé selon la revendication 5, **caractérisé en ce qu'**il coopère avec un procédé de régulation de niveau qui permet de détecter une situation dans laquelle le véhicule a été relevé dans une situation de "flottement".

7. Procédé selon les revendications 5 ou 6, **caractérisé en ce que** la présence d'une situation de "flottement" ou d'un contact perturbateur avec un matériau étranger présent sur la chaussée est détectée si, les amortisseurs pneumatiques étant vidés d'air, la distance entre le plancher du véhicule et la chaussée et/ou la distance entre au moins un essieu de roue ou une roue du véhicule et le plancher du véhicule dépassent une valeur de consigne prédéterminée.

8. Procédé selon la revendication 7, **caractérisé en ce que** la présence d'une situation de "flottement" ou d'un contact perturbateur avec un matériau étranger présent sur la chaussée est détectée si les critères de la revendication 7 sont satisfaits plus longtemps qu'un intervalle de temps prédéterminé.

9. Procédé selon au moins l'une des revendications précédentes, **caractérisé en ce que** lorsqu'une situation de "flottement" est détectée, les amortisseurs pneumatiques sont remplis d'air comprimé à un niveau initial et l'ajustement éventuel par le dispositif d'ajustement de niveau est bloqué si le moteur d'entraînement du véhicule est débranché.

10. Procédé selon l'une des revendications 1 à 9, **caractérisé en ce qu'**après détection d'un contact perturbateur avec un matériau étranger présent sur la chaussée, l'ajustement par le dispositif d'équilibrage de niveau est admis si le moteur d'entraînement du véhicule est branché.

11. Procédé selon l'une des revendications 1 à 10, **caractérisé en ce que** l'ajustement par le dispositif d'équilibrage de niveau est admis s'il a pour effet une augmentation de la distance du plancher du véhicule par rapport à la chaussée.
